Europäisches Patentamt

**European Patent Office**

Office européen des brevets

(19)

(11) **EP 1 102 084 B1**

(12) **EUROPÄISCHE PATENTSCHRIFT**

(45) Veröffentlichungstag und Bekanntmachung des Hinweises auf die Patenterteilung:
**14.04.2004  Patentblatt 2004/16**

(51) Int Cl.$^7$: **G01S 3/14**

(21) Anmeldenummer: **00124592.7**

(22) Anmeldetag: **10.11.2000**

(54) **Verfahren zur Bestimmung der Orientierung einer definierten azimutalen Richtung einer Navigationseinrichtung**

Method to determine the orientation of the azimuth direction of a navigation apparatus

Procédé de détermination de l'orientation de la direction en azimut d'un appareil de navigation

(84) Benannte Vertragsstaaten:
**AT BE CH CY DE DK ES FI FR GB GR IE IT LI LU MC NL PT SE TR**

(30) Priorität: **15.11.1999  DE 19955044**

(43) Veröffentlichungstag der Anmeldung:
**23.05.2001  Patentblatt 2001/21**

(73) Patentinhaber: **Deutsches Zentrum für Luft- und Raumfahrt e.V.**
**53175 Bonn (DE)**

(72) Erfinder:
- **Angermann, Michael, Dipl.-Ing.**
  **82166 Gräfelfing (DE)**
- **Steingass, Alexander, Dipl.-Ing.**
  **82205 Gilching (DE)**
- **Robertson, Patrick, Dr.**
  **82541 Ammerland (DE)**

(74) Vertreter: **von Kirschbaum, Albrecht, Dipl.-Ing.**
**Patentanwalt,**
**Postfach 15 20**
**82102 Germering (DE)**

(56) Entgegenhaltungen:
**WO-A-99/34230          US-A- 4 277 170**
**US-A- 4 685 800**

- **PATENT ABSTRACTS OF JAPAN vol. 011, no. 058 (P-550), 21. Februar 1987 (1987-02-21) & JP 61 223679 A (TOSHIBA CORP), 4. Oktober 1986 (1986-10-04)**
- **PATENT ABSTRACTS OF JAPAN vol. 018, no. 298 (P-1749), 7. Juni 1994 (1994-06-07) & JP 06 059725 A (SEKISUI CHEM CO LTD), 4. März 1994 (1994-03-04)**

**Beschreibung**

Die Erfindung betrifft ein Verfahren zur Bestimmung der Orientierung einer definierten azimutalen Hauptrichtung einer sich in einem geschlossenen oder offenen Raum befindenden Navigationseinrichtung, die in den Raum ausgestrahlte Strahlung elektromagnetischer Wellen oder Ultraschallwellen empfängt und diesbezüglich auswertet.

Aus der Funknavigationstechnik sind insbesondere für die Luftfahrt verschiedene Verfahren und Systeme zur Richtungsfindung bekannt.

Bei einem beispielsweise aus Brockhaus: "Naturwissenschaften und Technik", (Sonderausgabe), Band 1, A-Ek, 1989, ISBN 3-7653-0451-4, Mannheim, Seite 23 (Stichwort: ADF) sowie Band 2, El-In, ISBN 3-7653-0452-2, Seite 160 (Stichwort: Funkpeiler) bekannten Funkpeilverfahren (ADF; Automatic Detection Finding) wird von einer Bodenstation als sogenanntes Funkfeuer eine Hochfrequenz-Trägerschwingung ausgestrahlt. Diese kann unmoduliert sein oder eine Kennung des Funkfeuers beinhalten. Ein Bordempfänger ermittelt seine Orientierung mittels einer sogenannten Kreuzantenne. Hierbei wird der Winkel zwischen einer definierten Hauptachse der Antenne und dem eintreffenden Strahl ermittelt. Der Nachteil bei diesem Verfahren ist, daß der Bordempfänger zwar ermitteln kann, in welcher azimutalen Richtung die ausstrahlende Bodenstation zu ihm steht, ihm aber aus dem Peilergebnis nicht bekannt gemacht wird, in welcher Richtung Norden ist. Ähnliche Peilverfahren sind auch aus R. Grabau, K. Pfaff: "Funkpeiltechnik", 1989, Franckh'sche Verlagshandlung, W. Keller & Co., Stuttgart, ISBN 3-440-05991-X, Seiten 97 bis 99 und Seiten 344 bis 347 bekannt.

Beim ebenfalls hauptsächlich in der Luftfahrt angewandten Drehfunkfeuerverfahren (VOR; VHF Omnidirectional Radio Range), das z.B. in Brockhaus: "Naturwissenschaften und Technik", (Sonderausgabe), Band 5, So-Z, 1989,ISBN 3-7653-0455-7, Mannheim, Seite 220 (Stichwort: VOR) beschrieben ist, sendet ein VOR-Sender seine Strahlungen auf zwei Frequenzen aus. Auf der einen sendet er ein kurzes Signal in alle Richtungen rundum (omnidirektional) und anschließend strahlt er auf der anderen Frequenz ein Signal mit einem gerichteten Strahl in Nordrichtung aus, der sich langsam im Uhrzeigersinn dreht. Ein auf dieses System abgestellter Bordempfänger kann nun die Zeitspanne messen, die vom Empfang des omnidirektional ausgestrahlten Signals bis zum Empfang des gerichtet ausgestrahlten Signals vergeht. Aus dieser Zeitspanne und der Drehgeschwindigkeit kann im Bordempfänger der Raumsektor ermittelt werden, in welchem sich der Bordempfänger gerade befindet. Hierbei besteht jedoch der Nachteil, daß der Bordempfänger nichts über seine eigene Orientierung im Raum erfährt. Die Nordrichtung muß von ihm selbst bestimmt werden.

Das VOR-Verfahren und das ADF-Verfahren haben auch beide den Nachteil, daß es sich um Verfahren in analoger Technik aus der Luftfahrt handelt. Dementsprechend schlecht arbeiten sie unter Indoor-Bedingungen, da Reflexionen der Senderstrahlungen an den Wänden auf die notwendigerweise schmalbandigen Signale schlimme Auswirkungen haben. Die Verwendung dieser bekannten Verfahren im Indoor-Bereich ist somit sehr kritisch. Ebenso ist diesen beiden Verfahren gemein, daß sie zur Bestimmung der Nordrichtung nicht geeignet sind. Da sie in der Luftfahrt verwendet werden, bei der ein Magnet- oder Kreiselkompaß üblich ist, ist dies jedoch kein ernsthaftes Problem. Diese Funkfeuer werden als "Überflugpunkte" auf Luftstraßen eingesetzt, so daß es in aller Regel ausreicht, den Kurs zum Funkfeuer zu kennen.

In DE 35 26 564 A1 ist ein Verfahren zur Bestimmung des momentanen Standortes von Containerfahrzeugen innerhalb eines Lagerplatzes beschrieben. Bei diesem Verfahren werden zwei stationäre Sender verwendet, die jeweils gebündelte Wellenenergie in Form eines den Lagerplatz fortlaufend überstreichenden Sendestrahls aussenden. Jedem der beiden Sendestrahlen ist eine seine momentane Abstrahlrichtung kennzeichnende Richtungsinformation aufgeprägt. In jedem Containerfahrzeug werden mittels eines darin untergebrachten Empfängers die beiden Sendestrahlen empfangen und die in den beiden empfangenen Sendestrahlen enthaltenen Richtungsinformationen ermittelt, so daß aus diesen beiden Richtungsinformationen mittels eines Positionsrechners die Standlinie und die Momentanposition des betreffenden Containerfahrzeugs errechnet werden können. Von wesentlicher Bedeutung ist hierbei, daß zwei getrennte, auseinander liegende Sendestationen vorgesehen sein müssen und daß eine zum Prinzip der Kreuzpeilung analoge Schnittpunktberechnung zur Fahrzeugpositionsermittlung durchgeführt wird. Die Bestimmung der himmelsrichtungsmäßigen Orientierung einer definierten azimutalen Hauptrichtung des Fahrzeugs, Containers oder eines eventuell darin enthaltenen Navigationsgeräts, also eine Kompaßfunktion, ist mit diesem bekannten Verfahren keinesfalls möglich und wird damit auch nicht angestrebt.

In US 4 277 170 ist die Bestimmung der Richtung eines Flugzeugs relativ zum eigenen Flugzeug beschrieben. Es wird ein Sender verwendet, der einen rotierenden Laserstrahl emittiert, dessen Polarisation sich in Abhängigkeit von seinem momentanen Drehwinkel ändert.

US 4 685 800 beschreibt ein Verfahren zum Ausrichten eines Empfängers. Ein omnidirektionaler Sender emittiert Lichtpulse, die Informationen über die momentane Position eines rotierenden Laserstrahls beinhalten.

Als Navigationseinrichtung ist auch der GPS (Global Positioning System)-Kompaß bekannt. Hierbei ermittelt ein Empfänger den Ort von mindestens zwei Antennen, die in festem Abstand zueinander montiert sind. Er kann somit die Nordrichtung ausfindig machen. Ein Nachteil hierbei ist, daß mindestens vier Satelliten sichtbar sein müssen. Für eine Indoor-Anwendung ist dies nicht möglich. Daher müßten mindestens vier Pseudo-Strahlungsquellen im Raum montiert werden, was einen beachtlichen Aufwand und erhebliche damit verbundene Kosten verursacht. GPS-Kompaßempfänger sind z.B. in EP 0 587 954 A1, US-A-4 384 293 und US-A-4 881 080 beschrieben.

Aufgabe der Erfindung ist es, ein Richtungserkennungsverfahren zu schaffen, das es einem die elektromagnetische Strahlung oder Ultraschallstrahlung einer Sendestation in einem geschlossenen oder offenen Raum empfangenden Navigationseinrichtung ermöglicht, nicht nur die Winkellage in bezug auf diese Sendestation, sondern auch auf eine festgelegte geographische Himmelsrichtung, vorzugsweise die Nordrichtung, zu ermitteln. Dadurch soll insbesondere sichergestellt werden, daß eine die Navigationseinrichtung tragende Person in einem Raum innerhalb eines Gebäudes über die ihr von der Sendestation mitgeteilte örtliche Position stets auch zuverlässig die azimutrichtungsmäßige Lage der Navigationseinrichtung im Raum erkennen kann, wobei die Navigationseinrichtung ein im Rahmen eines Reiseplanungssystems verwendetes mobiles drahtloses Informationsgerät sein kann.

Gemäß der Erfindung, die sich auf ein Verfahren der eingangs genannten Art bezieht, wird diese Aufgabe dadurch gelöst, daß von einer Sendestation zum einen eine omnidirektionale Strahlung ausgestrahlt wird, die von einer Peileinrichtung der empfangenden Navigationseinrichtung zur Bestimmung des Winkels δ zwischen der Hauptrichtung und der Richtung zur Sendestation genutzt wird, daß von der gleichen Sendestation zum anderen in der Azimutebene umlaufend eine gerichtete Strahlung ausgestrahlt wird, die in einer festgelegten geographischen Himmelsrichtung den Beginn einer ihre momentane Umlaufwinkelposition angebenden Funktion enthält und in der empfangenden Navigationseinrichtung durch Auswertung dieser Funktion zur Bestimmung desjenigen Winkels α genutzt wird, unter welchem sich die Strecke zwischen dem Ort der empfangenden Navigationseinrichtung und der Sendestation in bezug auf die festgelegte geographische Himmelsrichtung befindet, und daß durch Kombination der beiden Winkel δ und α mit Hilfe des mathematischen Zusammenhangs

$$\gamma = \alpha + \delta - 180°$$

ermittelt wird, in welchem Winkel γ die definierte Hauptrichtung der empfangenden Navigationseinrichtung zur festgelegten geographischen Himmelsrichtung steht. Die festgelegte geographische Himmelsrichtung, in welcher die Funktion der umlaufenden gerichteten Strahlung der Sendestation ihren Beginn hat, ist in bevorzugter Weise die Nordrichtung.

In vorteilhafter Weise sind der omnidirektional von der Sendestation ausgestrahlten Strahlung Datensignale aufgeprägt, welche zur Positionsermittlung in der empfangenden Navigationseinrichtung verwendet werden können (sogenannte Beacon-Funktion).

Die empfangende Navigationseinrichtung kann in zweckmäßiger Weise ein im Rahmen eines Reiseplanungssystems verwendetes mobiles drahtloses Informationsgerät sein, das von einer Person mitgeführt wird, der Planung und dem Ablauf einer Reise dient und dazu Positionsdaten aufnimmt und verarbeitet, die außer von den im Raum befindlichen, der Peilung dienenden Sendestationen auch von weiteren Positionsermittlungseinrichtungen stammen können, die einen Navigationsservice zur Verfügung stellen.

Durch das Verfahren nach der Erfindung wird beim Einsatz von solchen Reiseplanungssystemen die Ausgabe einer Richtungsanweisung an eine Person durch das drahtlose Informationsgerät ermöglicht, da nicht nur dessen Position, sondern auch dessen azimutale Orientierung im Raum dann bekannt ist. Richtungsanweisungen wie beispielsweise "Gehen Sie nach rechts" sind dann zum Erreichen eines örtlichen Zieles möglich.

Die erwähnten weiteren Positionsermittlungseinrichtungen können Baken sein, die mit dem Rechnerbetriebsprogramm "Jini®" betrieben werden, und/ oder Baken sein, die in Lampen untergebracht sind. Derartige Baken arbeiten dann bei der Positionsermittlung des Informationsgerätes im Rahmen eines Reiseplanungssystems mit den auch für die Richtungspeilung eingesetzten Sendestationen in Kombination zusammen.

Wird beim Verfahren nach der Erfindung mit elektromagnetischen Wellen gearbeitet, so kommen dafür vor allem hochfrequente Funkwellen, insbesondere im Frequenzbereich der Zentimeterwellen, und Wellen im Infrarot-Bereich in Betracht.

Eine erste Realisierungsform des Verfahrens nach der Erfindung besteht darin, daß von der Sendestation durch die omnidirektionale Strahlung periodisch ein CDMA(Code Division Multiple Access; Codemultiplex)-Codewort ausgestrahlt wird. Dabei können dem CDMA-Codewort zusätzlich auch noch Daten aufgeprägt sein, die insbesondere der Positionsermittlung in der empfangenden Navigationseinrichtung dienen (Beacon-Funktion).

Bei dieser Realisierungsform wird durch die gerichtete Strahlung gleichzeitig ein zweites CDMA-Codewort abgestrahlt, wobei der Beginn der beiden CDMA-Codewörter immer zeitsynchron liegt.

Die gerichtete Abstrahlung wird dabei so vorgenommen, daß der Strahl stets zum Codewortanfang in Richtung der festgelegten geographischen Richtung, also vorzugsweise in Nordrichtung, zeigt und sich bis zum nächsten Codewortanfang einmal um 360 Grad dreht, wodurch die die momentane Umlaufwinkelposition angebende Funktion zur Bestimmung des Winkels α gebildet wird. Vorteilhaft ist das durch die gerichtete Strahlung abgestrahlte zweite CDMA-Codewort orthogonal zu dem durch die omnidirektionale Strahlung periodisch ausgestrahlten CDMA-Codewort. Die empfangende Navigationseinrichtung, die vorher bereits den Träger der omnidirektionalen Strahlung synchronisiert hat, entspreizt das in der gerichteten Strahlung enthaltene CDMA-Signal durch Korrelation und bestimmt somit den Winkel $\alpha$, unter welchem sich die Strecke zwischen dem Ort der empfangenden Navigationseinrichtung und der Sendestation in bezug auf die festgelegte geographische Richtung, also vorzugsweise die Nordrichtung, befindet.

Anstelle der Übertragung mit CDMA-Codewörtern kann auch eine Übertragung mit FDMA (Frequency Division Multiple Access; Frequenzmultiplex), TDMA (Time Division Multiple Access; Zeitmultiplex), SDMA (Space Division Multiple Access; Raummultiplex) oder Kombinationen davon vorgenommen werden.

Zur Positionsbestimmung der empfangenden Navigationseinrichtung kann in vorteilhafter Weise eine Kreuzpeilung mit zwei Sendestationen vorgenommen werden.

Bei Verwendung von Funkwellen läßt sich der Winkel $\delta$ zwischen der Hauptrichtung der empfangenden Navigationseinrichtung und der Richtung zur Sendestation vorteilhaft mittels einer Kreuzantenne oder einer intelligenten Antenne bestimmen. Bei Verwendung von Funkwellen wird die gerichtete Strahlung in der Sendestation zweckmäßig mittels einer drehbaren Richtantenne oder einer sogenannten smarten Antenne gebildet.

Eine zweite Realisierungsform eines Verfahrens nach der Erfindung ist so ausgebildet, daß die Infrarot-Strahlung der Sendestation mittels im Infrarot-Bereich wirksamen Lumineszenzdioden, d.h. sogenannten LEDs, ausgestrahlt wird, die in verschiedene Raumrichtungen ausstrahlen. Die im Infrarot-Bereich wirksamen Lumineszenzdioden können dabei zur Vereinfachung der Richtungsbestimmung in die einzelnen Raumrichtungen unterschiedliche CDMA-Codewörter versenden. Die von der Sendestation kommende Infrarot-Strahlung wird dabei vorteilhaft über eine auf der empfangenden Navigationseinrichtung angebrachte und für Infrarot-Strahlung durchlässige Kuppel empfangen, welche die obere Hemisphäre in eine Ebene abbildet, wobei dann die Einfallsrichtung der von der Sendestation kommenden Infrarot-Strahlung mittels eines segmentierten sensitiven Halbleiterfeldes bestimmt wird, das sich unter der durchlässigen Kuppel befindet.

Die Erfindung wird nachfolgend anhand der anliegenden Zeichnungen erläutert. Es zeigen:

Fig.1     ein Diagramm zur Verdeutlichung der mit Hilfe des Verfahrens nach der Erfindung durchführbaren Peilung der Nordrichtung,

Fig.2     eine schematische Seitenansicht einer mit Infrarot-Peilung in einem Raum arbeitenden Einrichtung zur Durchführung des Verfahrens nach der Erfindung,

Fig.3     eine schematische Ansicht der Einrichtung von Fig.2 von oben, und

Fig.4     eine schematische Seitenansicht einer für Infrarot-Strahlung durchlässigen, in der Einrichtung von Fig.2 und 3 verwendeten Kuppel zur Aufnahme entweder von LEDs oder von Detektoren.

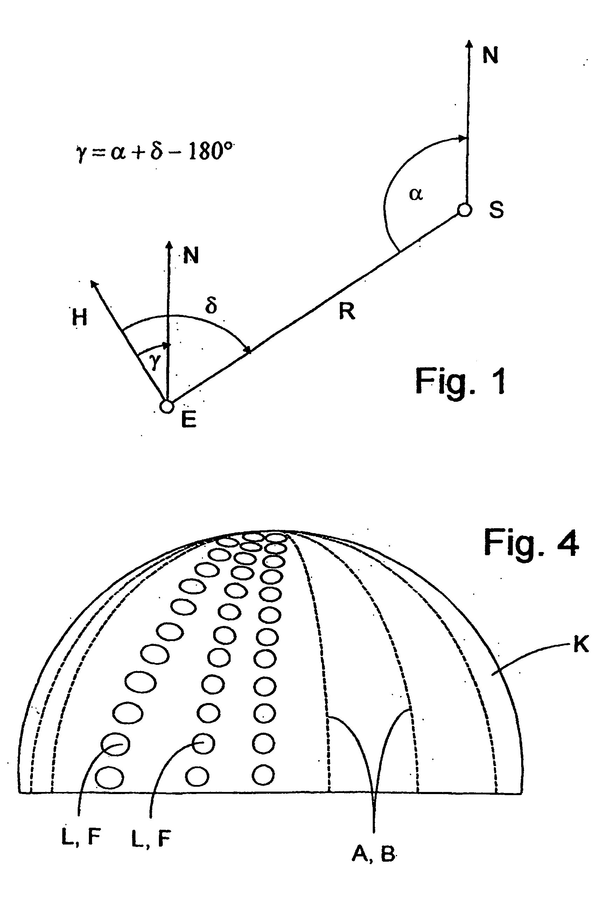

Anhand von Fig.1 wird das Prinzip des Verfahrens für Funkwellen beschrieben. Eine Sendestation S in einem Raum innerhalb eines Gebäudes strahlt periodisch omnidirektional ein CDMA-Codewort aus, dem zur Erfüllung einer Beacon-Funktion zu Positionsermittlungszwecken auch noch Daten aufgeprägt sein können. Die Ausstrahlung wird in vorteilhafter Weise mit einer hohen Trägerfrequenz, z.B. bei 20 GHz, vorgenommen, damit die Signale durch die Luftabsorption möglichst schnell gedämpft werden. Ebenso können solche Wellen die Wände eines Raumes in der Regel nicht durchdringen. Eine empfangende Navigationseinrichtung E kann den Winkel $\delta$ mit Hilfe einer Kreuzantenne oder einer intelligenten Antenne bestimmen. Der Winkel $\delta$ ist bei der Navigationseinrichtung E der Winkel zwischen einer definierten Hauptrichtung H dieser Navigationseinrichtung E und der Richtung R der Strecke zur Sendestation S.

Die empfangende Navigationseinrichtung E kann ein im Rahmen eines Reiseplanungssystems verwendetes mobiles drahtloses Informationsgerät sein, das von einer Person mitgeführt wird, der Planung und dem Ablauf einer Reise dient und dazu Positionsdaten aufnimmt und verarbeitet, die außer von den im Raum befindlichen, der Peilung dienenden Sendestationen auch von weiteren Positionsermittlungseinrichtungen stammen können, die einen Navigationsservice zur Verfügung stellen.

Gleichzeitig mit dem erwähnten CDMA-Codewort wird von der Sendestation S ein zweites, möglichst orthogonales Codewort mit einer Richtantenne in ähnlicher Weise wie beim VOR-Drehfunkfeuer abgestrahlt. Hierbei liegt der Beginn der beiden Codewörter immer zeitsynchron. Diese gerichtete Abstrahlung von der Sendestation S geschieht, indem der Strahl stets zum Codewortanfang in Nordrichtung N zeigt. Bis zum nächsten Codewort-Anfang dreht er sich einmal um 360 Grad. Diese Richtstrahldrehung läßt sich mit einer drehbaren Richtantenne oder einer sogenannten Smart-Antenne realisieren.

Die empfangende Navigationseinrichtung E, die bereits den omnidirektionalen Träger synchronisiert hat, kann den gerichteten Strahl durch Korrelation entspreizen und somit bestimmen, in welchem Raumsegment er sich befindet. Die Navigationseinrichtung E stellt somit den Winkel $\alpha$ fest, der zwischen der Nordrichtung N und der Richtung R der die Navigationseinrichtung E und die Sendestation S verbindenden Strekke besteht. Durch eine Kombination der Winkel $\delta$ und $\alpha$ kann in der Navigationseinrichtung E ermittelt werden, unter welchem Winkel $\gamma$ die Hauptrichtung H der Navigationseinrichtung E zur Nordrichtung N z.B. von einer Person im Augenblick gehalten wird. Auf diese Weise wird in der Navigationseinrichtung E eine echte Kompaßfunktion realisiert, abgesehen von der Möglichkeit einer Positionsermittlung. Der mathematische Zusammenhang lautet folgendermaßen:

$$\gamma = \alpha + \delta - 180°.$$

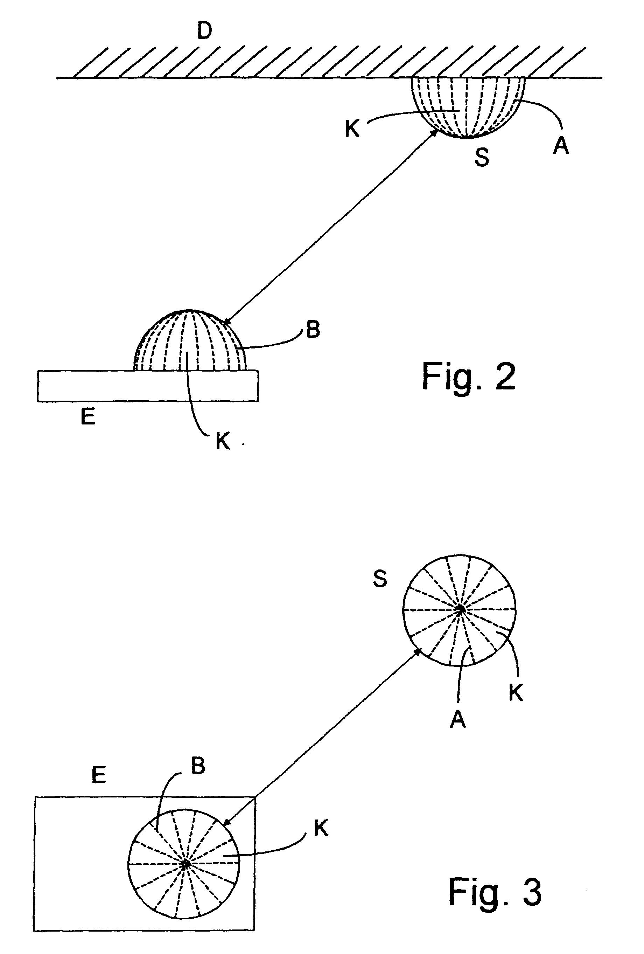

Bei der im folgenden, anhand der Fig.2 bis 4 erläuterten Realisierungsform wird nicht auf Funkwellen, sondern auf Infrarot-Strahler zurückgegriffen. Das Funktionsprinzip ist aber im Prinzip ähnlich zu der vorher anhand der Fig.1 beschriebenen Realisierungsweise unter Verwendung von Funkwellen.

Die beispielsweise an der Decke D eines Raumes angebrachte Sendestation S besteht hier vorzugsweise aus für die Abgabe von Infrarot-Strahlung ausgelegten Lumineszenzdioden L, die auch unter der Bezeichnung "LED"s ein Begriff sind und die in verschiedene Raumrichtungen strahlen. Eine derartige Ausführung in Sendesegmenten A, die unter einer bezüglich Infrarot-Strahlung durchlässigen Kuppel K untergebracht sind, ist besonders vorteilhaft, da eine solche Sendestation S äußerst kostengünstig und einfach zu realisieren ist. Es sind auch Ausführungen möglich, bei denen die Lumineszenzdioden in die einzelnen Raumrichtungen unterschiedliche Codewörter versenden und somit die Richtungsbestimmung durch eine die Infrarot-Strahlung empfangende Navigationseinrichtung E vereinfachen.

An der mobilen empfangenden Navigationseinrichtung E ist eine für Infrarot-Strahlung durchlässige Kuppel K montiert, welche die obere Hemisphäre in eine Ebene abbildet. Unter dieser Kuppel befindet sich ein hinsichtlich Infrarot-Strahlung sensitiver Halbleiter, der rundum in Empfangssegmente B mit Infrarot-Detektoren aufgeteilt ist und somit die Einfallsrichtung bestimmen kann. Eine Spreizung des Signals mittels CDMA-Codewörtern bewirkt auch hier eine gute Verwendbarkeit im Indoor-Bereich sowie eine gute Unterdrükkung der Hintergrundstrahlung.

In Fig.4 ist eine für Infrarot-Strahlung durchlässige Kuppel K genauer dargestellt, die entweder für die Sendestation S verwendet werden kann und dann in Sendesegmenten A angeordnete Infrarot-Lumineszenzdioden L einschließt oder die in äußerlich gleicher Form für die empfangende Navigationseinrichtung E benutzt werden kann und in diesem Fall in Empfangssegmenten B angeordnete Infrarot-Detektoren F aus Halbleitermaterial einfaßt. Die gestrichelt eingezeichneten Linien entsprechen Sendesegmenten A bzw. Empfangssegmenten B.

Bezugszeichenliste

| A | Sendesegmente |
|---|---|
| B | Empfangssegmente |
| D | Decke |
| E | Empfangende Navigationseinrichtung |
| F | Infrarot-Detektor |
| H | Hauptrichtung der Navigationseinrichtung |
| K | Kuppel |
| L | Lumineszenzdioden (LEDs) |
| N | Nordrichtung |
| R | Richtung zur Sendestation |
| S | Sendestation |
| $\alpha$, $\delta$, $\gamma$ | Winkel |

**Patentansprüche**

1. Verfahren zur Bestimmung der Orientierung einer definierten azimutalen Hauptrichtung einer sich in einem geschlossenen oder offenen Raum befindenden Navigationseinrichtung, die in den Raum ausgestrahlte Strahlung elektromagnetischer Wellen oder Ultraschallwellen empfängt und diesbezüglich auswertet, **dadurch gekennzeichnet, daß** von einer Sendestation (S) zum einen eine omnidirektionale Strahlung ausgestrahlt wird, die von einer Peileinrichtung der empfangenden Navigationseinrichtung (E) zur Bestimmung des Winkels $\delta$ zwischen der Hauptrichtung (H) und der Richtung (R) zur Sendestation genutzt wird, daß von der gleichen Sendestation zum anderen in der Azimutebene umlaufend eine gerichtete Strahlung ausgestrahlt wird, die in einer festgelegten geographischen Himmelsrichtung den Beginn einer ihre momentane Umlaufwinkelposition angebenden Funktion enthält und in der empfangenden Navigationseinrichtung durch Auswertung dieser Funktion zur Bestimmung desjenigen Winkels $\alpha$ genutzt wird, unter welchem sich die Strecke zwischen dem Ort der empfangenden Navigationseinrichtung und der Sendestation in bezug auf die festgelegte geographische Himmelsrichtung befindet, und daß durch Kombination der beiden Winkel $\delta$ und $\alpha$ mit Hilfe des mathematischen Zusammenhangs

$$\gamma = \alpha + \delta - 180°$$

ermittelt wird, in welchem Winkel $\gamma$ die definierte Hauptrichtung der empfangenden Navigationseinrichtung zur festgelegten geographischen Himmelsrichtung steht.

**2.** Verfahren nach Anspruch 1, **dadurch gekennzeichnet, daß** der omnidirektional von der Sendestation (S) ausgestrahlten Strahlung Datensignale aufgeprägt sind, welche zur Positionsermittlung in der empfangenden Navigationseinrichtung (E) verwendet werden.

**3.** Verfahren nach Anspruch 1 oder 2, **dadurch gekennzeichnet, daß** die elektromagnetischen Wellen hochfrequente Funkwellen sind.

**4.** Verfahren nach Anspruch 3, **dadurch gekennzeichnet, daß** die hochfrequenten elektromagnetischen Wellen im Frequenzbereich der Zentimeterwellen liegen.

**5.** Verfahren nach Anspruch 1 oder 2, **dadurch gekennzeichnet, daß** die elektromagnetischen Wellen im Infrarot-Bereich liegen.

**6.** Verfahren nach einem der vorhergehenden Ansprüche, **dadurch gekennzeichnet, daß** von der Sendestation (S) durch die omnidirektionale Strahlung periodisch ein CDMA(Code Division Multiple Access; Codemultiplex)-Codewort ausgestrahlt wird.

**7.** Verfahren nach Anspruch 6, **dadurch gekennzeichnet, daß** dem CDMA-Codewort zusätzlich auch noch Daten aufgeprägt sind, die insbesondere der Positionsermittlung in der empfangenden Navigationseinrichtung (E) dienen (Beacon-Funktion).

**8.** Verfahren nach Anspruch 6 oder 7, **dadurch gekennzeichnet, daß** durch die gerichtete Strahlung gleichzeitig ein zweites CDMA-Codewort abgestrahlt wird, wobei der Beginn der beiden CDMA-Codewörter immer zeitsynchron liegt, und daß die gerichtete Abstrahlung so vorgenommen wird, daß der Strahl stets zum Codewortanfang in Richtung der festgelegten geographischen Himmelsrichtung zeigt und sich bis zum nächsten Codewortanfang einmal um 360 Grad dreht, wodurch die die momentane Umlaufwinkelposition angebende Funktion zur Bestimmung des Winkels a gebildet wird.

**9.** Verfahren nach Anspruch 8, **dadurch gekennzeichnet, daß** das durch die gerichtete Strahlung abgestrahlte zweite CDMA-Codewort orthogonal zu dem durch die omnidirektionale Strahlung periodisch ausgestrahlten CDMA-Codewort ist.

**10.** Verfahren nach Anspruch 8, **dadurch gekennzeichnet, daß** die empfangende Navigationseinrichtung (E), die vorher bereits den Träger der omnidirektionalen Strahlung synchronisiert hat, das in der gerichteten Strahlung enthaltene CDMA-Signal durch Korrelation entspreizt und somit den Winkel $\alpha$ bestimmt, unter welchem sich die Strecke zwischen dem Ort der empfangenden Navigationseinrichtung (E) und der Sendestation (S) in bezug auf die festgelegte geographische Himmelsrichtung befindet.

**11.** Verfahren nach den Ansprüchen 6 bis 10, **dadurch gekennzeichnet, daß** anstelle der Übertragung mit CDMA-Codewörtern eine Übertragung mit FDMA (Frequency Division Multiple Access; Frequenzmultiplex), TDMA (Time Division Multiple Access; Zeitmultiplex), SDMA (Space Division Multiple Access; Raummultiplex) oder Kombinationen davon vorgenommen wird.

**12.** Verfahren nach einem der vorhergehenden Ansprüche, **dadurch gekennzeichnet, daß** zur Positionsbestimmung der empfangenden Navigationseinrichtung (E) eine Kreuzpeilung mit zwei Sendestationen (S) vorgenommen wird.

**13.** Verfahren nach einem der vorhergehenden Ansprüche, **dadurch gekennzeichnet, daß** die festgelegte geographische Himmelsrichtung, in welcher die Funktion der umlaufenden gerichteten Strahlung der Sendestation ihren Beginn hat, die Nordrichtung (N) ist.

**14.** Verfahren nach einem der vorhergehenden Ansprüche mit Ausnahme des Anspruchs 5, **dadurch gekennzeichnet, daß** bei Verwendung von Funkwellen der Winkel δ zwischen der Hauptrichtung (H) der empfangenden Navigationseinrichtung (E) und der Richtung (R) zur Sendestation (S) mittels einer Kreuzantenne oder einer intelligenten Antenne in der Navigationseinrichtung bestimmt wird.

**15.** Verfahren nach einem der Ansprüche 1 bis 13 mit Ausnahme des Anspruchs 5, **dadurch gekennzeichnet, daß** bei Verwendung von Funkwellen die gerichtete Strahlung in der Sendestation (S) mittels einer drehbaren Richtantenne oder einer sogenannten smarten Antenne gebildet wird.

**16.** Verfahren nach Anspruch 5, **dadurch gekennzeichnet, daß** die Infrarot-Strahlung der Sendestation (S) mittels im Infrarot-Bereich wirksamen Lumineszenzdioden (L), d.h. sogenannten LEDs, ausgestrahlt wird, die in verschiedene Raumrichtungen ausstrahlen.

**17.** Verfahren nach Anspruch 16, **dadurch gekennzeichnet, daß** die im Infrarot-Bereich wirksamen Lumineszenzdioden (L) in die einzelnen Raumrichtungen unterschiedliche CDMA-Codewörter versenden.

**18.** Verfahren nach Anspruch 16 oder 17, **dadurch gekennzeichnet, daß** die von der Sendestation (S) kommende Infrarot-Strahlung über eine auf der empfangenden Navigationseinrichtung (E) angebrachte und für Infrarot-Strahlung durchlässige Kuppel (K) empfangen wird, welche die obere Hemisphäre in eine Ebene abbildet, und daß die Einfallsrichtung der von der Sendestation (S) kommenden Infrarot-Strahlung mittels eines segmentierten sensitiven Halbleiterfeldes bestimmt wird, das sich unter der durchlässigen Kuppel befindet.

19. Verwenden des Verfahrens nach einem der Ansprüche 1 bis 18 zur Bestimmung der Orientierung einer Navigationseinrichtung (E), die als ein im Rahmen eines Reiseplanungssystems verwendetes mobiles drahtloses Informationsgerät ausgebildet ist, das von einer Person mitgeführt wird, der Planung und dem Ablauf einer Reise dient und dazu Positionsdaten aufnimmt und verarbeitet, die außer von den im Raum befindlichen, der Peilung dienenden Sendestationen auch von weiteren Positionsermittlungseinrichtungen stammen können, die einen Navigationsservice zur Verfügung stellen.

**Claims**

1. A method for determining the orientation of a defined azimuthal principle direction of a navigation means located indoors or outdoors for receiving and analysing radiation of electromagnetic or ultrasonic waves **characterized in that**, for one thing, radiating from a transmitter station (S) omnidirectional radiation used by a direction finder of said receiving navigation means (E) for determining the angle δ between the principle direction (H) and the direction (R) to said transmitter station, for another, beaming from said same transmitter station in the azimuthal plane rotating a beam containing in a defined geographical cardinal point the start of a function indicating its momentary angle position in rotation and in said receiving navigation means making use of this function to determine the angle α of the link between the location of said receiving navigation means and said transmitter station relative to said defined geographical cardinal point, and establishing from the combination of said two angles α and δ with the aid of the mathematical notation

$$\gamma = \alpha + \delta - 180°$$

said angle γ of said defined principle direction of said receiving navigation means relative to said defined geographical cardinal point.

2. The method as set forth in claim 1, **characterized in that** data signals are impressed in said omnidirectional radiation of said transmitter station (S) for position finding in said receiving navigation means (E).

3. The method as set forth in claim 1 or 2, **characterized in that** said electromagnetic waves are high-frequency radio waves.

4. The method as set forth in claim 3, **characterized in that** said high-frequency electromagnetic waves are in the centimetre wave frequency range.

5. The method as set forth in claim 1 or 2, **characterized in that** said electromagnetic waves are in the infrared range.

6. The method as set forth in any of the preceding claims, **characterized in that** a code division multiple access (CDMA) code word is omnidirectionally radiated by said transmitter station (S) periodically.

7. The method as set forth in claim 6, **characterized in that** said CDMA code word is additionally impressed with data serving more particularly for position finding in said receiving navigation means (E) (beacon function).

8. The method as set forth in claim 6 or 7, **characterized in that** a second CDMA code word is simultaneously beamed, the start of said two CDMA code words always being synchronized in time and that beaming is done so that said beam at the start of said code word always points in the direction of said defined geographical cardinal point and rotates through 360 degrees up to the next code word start, the function indicating the momentary position of said rotational angle being formed for determining said angle α.

9. The method as set forth in claim 8, **characterized in that** said second CDMA code word is beamed orthogonal to said CDMA code word periodically radiated omnidirectionally.

10. The method as set forth in claim 8, **characterized in that** said receiving navigation means (E) having previously synchronized the carrier of said omnidirectional radiation, dispreads said CDMA signal contained in the beam by correlation in thus determining said angle α at which the link between the location of said receiving navigation means (E) and said transmitter station (S) is sited relative to said defined geographical cardinal point.

11. The method as set forth in any of the claims 6 to 10, **characterized in that** instead of transmission by code (CDMA), transmission by frequency (FDMA), time (TDMA) or space (SDMA) or in any combination thereof is employed.

**12.** The method as set forth in any of the preceding claims, **characterized in that** for finding the position of said receiving navigation means (E) crossed direction finding with two transmitter stations (S) is employed.

**13.** The method as set forth in any of the preceding claims, **characterized in that** said defined geographical cardinal point, in which the function of said rotating directed beam of said transmitter station has its start, is the north direction (N).

**14.** The method as set forth in any of the preceding claims, except for claim 5, **characterized in that** when using radio waves said angle δ between said principle direction (H) of said receiving navigation means (E) and said direction (R) to said transmitter station (S) is determined by means of a crossed or smart antenna in said navigation means.

**15.** The method as set forth in any of the claims 1 to 13, except for claim 5, **characterized in that** when using radio waves said beam is formed in said transmitter station (S) by means of a rotatable directional antenna or smart antenna.

**16.** The method as set forth in claim 5, **characterized in that** the infrared radiation of said transmitter station (S) is emitted by means of luminescence diodes (L), i.e. so-called LEDs effective in the infrared range emitting in various directions in space.

**17.** The method as set forth in claim 16, **characterized in that** said luminescence diodes (L) effective in the infrared range, send differing CDMA code words in various directions in space.

**18.** The method as set forth in claim 16 or 17, **characterized in that** the infrared radiation coming from said transmitter station (S) is received via an infrared transparent dome (K) covering said receiving navigation means (E) and imaging said upper hemisphere in a plane, and that the direction of incidence of said infrared radiation coming from said transmitter station (S) being determined by means of a segmented sensitive semiconductor array located beneath said transparent dome.

**19.** Use of the method as set forth in any of the claims 1 to 18 for determining the orientation of a navigation means (E) as a mobile, wireless information device used in the scope of a personal travel planning system serving to plan and schedule a trip and capturing and processing for this purpose positional data as may also originate in other position finders remote from the transmitter stations in space serving direction finding in making available a navigation service.

**Revendications**

**1.** Procédé pour déterminer l'orientation d'une direction principale azimutale définie d'un dispositif de navigation situé dans un espace fermé ou dans un espace ouvert et qui reçoit le rayonnement, émis dans l'espace, d'ondes électromagnétiques ou d'ondes ultrasonores et réalise une évaluation à partir de ces ondes, **caractérisé en ce qu'**un poste d'émission (S) émet d'une part un rayonnement omnidirectionnel, qui est utilisé par un dispositif de repérage du dispositif de navigation (E) effectuant la réception pour déterminer l'angle δ entre la direction principale (H) et la direction (R) dirigée vers le poste d'émission, et **en ce que** le même poste d'émission émet d'autre part, circonférentiellement dans le plan azimutal, un rayonnement dirigé, qui contient, dans une direction géographique fixée du ciel le début d'une fonction indiquant sa position angulaire périphérique instantanée et est utilisé, dans le dispositif de navigation effectuant la réception, par évaluation de cette fonction pour déterminer l'angle α, sous lequel la section comprise entre l'emplacement du dispositif de navigation effectuant la réception et le poste d'émission par rapport à la direction géographique fixée du ciel, et **en ce que** la combinaison des deux angles δ et α est déterminée à l'aide de la relation mathématique

$$\gamma = \alpha + \delta - 180°$$

dans laquelle l'angle γ représente la direction principale définie du dispositif de navigation effectuant la réception, par rapport à la direction géographique fixée du ciel.

**2.** Procédé selon la revendication 1, **caractérisé en ce que** des signaux de données, qui sont utilisées pour déterminer la position dans le dispositif de navigation (E) effectuant la réception, sont appliqués au rayonnement émis de façon omnidirectionnelle par le poste d'émission (S).

**3.** Procédé selon la revendication 1 ou 2, **caractérisé en ce que** les ondes électromagnétiques sont des ondes radio à haute fréquence.

**4.** Procédé selon la revendication 3, **caractérisé en ce que** les ondes électromagnétiques à haute fréquence sont situées dans la gamme des fréquences des ondes centimétriques.

**5.** Procédé selon la revendication 1 ou 2, **caractérisé en ce que** les ondes électromagnétiques sont situées dans le domaine de l'infrarouge.

**6.** Procédé selon l'une quelconque des revendications précédentes, **caractérisé en ce qu'**un mot de code CDMA (Code Division Multiple Access; multiplexe de code) est émis périodiquement par le poste d'émission (S) au moyen du rayonnement omnidirectionnel.

7. Procédé selon la revendication 6, **caractérisé en ce que** des données, qui sont utilisées notamment pour déterminer la position dans le dispositif de navigation (E) effectuant la réception (fonction de balise), sont en outre également appliquées en supplément au mot de code CDMA.

8. Procédé selon la revendication 6 ou 7, **caractérisé en ce qu'**un second mot de code CDMA est émis simultanément par le rayonnement dirigé, le début des deux mots de code DCMA étant toujours synchrone dans le temps, et que l'émission dirigée est réalisée de telle sorte que le faisceau est dirigé toujours vers le début du mot de code dans la direction géographique fixée du ciel, et tourne une fois de 360 degrés jusqu'au début du mot de code suivant, ce qui a pour effet que la fonction indiquant la position angulaire périphérique instantanée est formée pour la détermination de l'angle $\alpha$.

9. Procédé selon la revendication 8, **caractérisé en ce que** le second mot de code CDMA émis par le rayonnement dirigé est orthogonal au mot de code CDMA émis périodiquement par le rayonnement omnidirectionnel.

10. Procédé selon la revendication 8, **caractérisé en ce que** le dispositif de navigation (E), qui effectue la réception et qui a synchronisé déjà au préalable la porteuse du rayonnement omnidirectionnel, supprime par corrélation l'étalement du signal CDMA contenu dans le rayonnement dirigé et détermine par conséquent l'ange $\alpha$, sous lequel la section entre l'emplacement du dispositif de navigation (E) effectuant la réception et le poste d'émission (S) est située par rapport à la direction géographique fixée du ciel.

11. Procédé selon les revendications 6 à 10, **caractérisé en ce qu'**à la place de la transmission avec des mots de code CDMA, on réalise une transmission FDMA (Frequency Division Multiple Access; multiplexe de fréquence), TDMA (Time Division Multiple Access; multiplexage temporel), SDMA (Space Division Multiple Access; multiplexage spatial) ou avec des combinaisons de ces systèmes.

12. Procédé selon l'une des revendications précédentes, **caractérisé en ce que** pour la détermination de position du dispositif de navigation (E) effectuant la réception, un repérage croisé est exécuté avec deux postes émetteurs (S).

13. Procédé selon l'une quelconque des revendications précédentes, **caractérisé en ce que** la direction géographique fixée du ciel, dans laquelle la fonction du rayonnement circonférentiel dirigé du poste d'émission a commencé, est la direction du nord (N).

14. Procédé selon l'une quelconque des revendications précédentes à l'exception de la revendication 5, **caractérisé en ce que** dans le cas de l'utilisation d'ondes radio, d'angle $\delta$ entre la direction principale (H) du dispositif de navigation (E) effectuant la réception et la direction (R) du poste d'émission (S) est déterminée au moyen d'une antenne en croix ou d'une antenne intelligente dans le dispositif de navigation.

15. Procédé selon l'une des revendications 1 à 13 à l'exception de la revendication 5, **caractérisé en ce que** dans le cas de l'utilisation d'ondes radio, le rayonnement dirigé est formé dans le poste émetteur (S) à l'aide d'une antenne directionnelle rotative ou de ce qu'on appelle une antenne smart.

16. Procédé selon la revendication 5, **caractérisé en ce que** le rayonnement infrarouge du poste émetteur (S) est émis au moyen de diodes à luminescente (L), c'est-à-dire ce qu'on appelle des diodes LED, actives dans le domaine infrarouge et qui émettent dans différentes directions spatiales.

17. Procédé selon la revendication 16, **caractérisé en ce que** les diodes à luminescence (L), actives dans le domaine infrarouge, émettent différents mots de code CDMA dans les différentes directions spatiales.

18. Procédé selon la revendication 16 ou 17, **caractérisé en ce que** le rayonnement infrarouge arrivant du poste émetteur (S) est reçu par l'intermédiaire d'une coupole (K) montée sur le dispositif de navigation (E) effectuant la réception et transparente pour le rayonnement infrarouge et qui forme l'image de l'hémisphère supérieur dans un plan, et que la direction d'incidence du rayonnement infrarouge arrivant du poste émetteur (S) est déterminée au moyen d'un champ de semiconducteurs sensible et segmenté, qui est situé au-dessous de la coupole transparente.

19. Utilisation du procédé selon l'une des revendications 1 à 18, pour déterminer l'orientation d'un dispositif de navigation (E), qui est agencé sous la forme d'un appareil de traitement d'informations mobile sans fil utilisé dans le cadre d'un système de programmation de voyages et qui est emmené par une personne et est utilisé pour la planification et le déroulement d'un voyage et enregistre et traite à cet effet des données de position qui peuvent provenir, en dehors des postes émetteurs situés dans l'espace et utilisés pour le repérage, également d'autres dispositifs de détermination de position qui disposent d'un service de navigation.

$$\gamma = \alpha + \delta - 180°$$

**N**

α

**S**

**N**

δ

**H**

γ

**R**

**E**

**Fig. 1**

**Fig. 4**

**K**

**L, F**   **L, F**

**A, B**

D

K    S    A

B

E    K

Fig. 2

S    K    A

E    B    K

Fig. 3